# EUROPÄISCHE PATENTANMELDUNG

(11) **EP 4 345 300 A1**
(43) Veröffentlichungstag der Anmeldung: **03.04.2024**
(21) Anmeldenummer: 22198241.6
(22) Anmeldetag: 28.09.2022
(51) Int. Cl.: F03D 80/00, F03D 80/80, F03D 80/70

(54) **BETRIEBSSICHERES PITCHROHR FÜR EINE BLATTEINSTELLWINKELREGELUNG EINER WINDKRAFTANLAGE**

(71) Anmelder: Flender GmbH, 46395 Bocholt (DE)
(72) Erfinder: König, Christian, 46395 Bocholt (DE); van Acken, Lars, 46395 Bocholt (DE)
(74) Vertreter: Michalski Hüttermann & Partner Patentanwälte mbB

(57) **Zusammenfassung**

Es ist ein Pitchrohr (26) für eine Blatteinstellwinkelregelung einer Windkraftanlage (10) vorgesehen mit einem sich von einem ersten Axialende zu einem zweiten Axialende erstreckenden Rohrkörper (28) zum Durchleiten von Versorgungsleitungen durch ein Getriebe (18), wobei der Rohrkörper (28) zur elektrischen Isolierung des ersten Axialendes gegenüber dem zweiten Axialende und/oder zur elektrischen Isolierung des Rohrkörpers (28) gegenüber dem Getriebe (18) zumindest in einem axialen Teilbereich aus einem Nichtleitermaterial hergestellt ist. Mit Hilfe des Nichtleitermaterials des Rohrkörpers (28) ist das Pitchrohr (26) selber elektrisch isolierend ausgestaltet, so dass kostengünstig und einfach eine elektrisch betriebssicherere Durchführung des Pitchrohrs (26) durch das Getriebe (18) der Windkraftanlage (10) ermöglicht ist.

## Beschreibung

Die Erfindung betrifft ein Pitchrohr, mit dessen Hilfe Versorgungsleitungen an eine Blatteinstellwinkelregelung einer Windkraftanlage herangeführt werden können. Die Erfindung betrifft zudem ein Getriebe mit einem derartigen Pitchrohr, einen Antriebsstrang mit einem derartigen Pitchrohr, eine Windkraftanlage mit einem derartigen Pitchrohr und ein Datenagglomerat zur virtuellen Abbildung eines derartigen Pitchrohrs zum Zwecke der additiven Fertigung und/oder Simulation.

Um bei Windkraftanlagen eine Blatteinstellwinkelregelung (Pitchregelung) vornehmen zu können, sind elektrische und/oder hydraulische Versorgungsleitungen erforderlich, die zwischen dem Rotor und einem generatorseitigen Anschluss verlaufen. Zur Aufnahme dieser Versorgungsleitungen dient ein als Pitchrohr bezeichnetes Rohr, das sich von einem Generator bis zu dem Rotor erstrecken kann. Insbesondere sind der Rotor und der Generator koaxial zueinander angeordnet, so dass das Pitchrohr durch ein zwischen dem Rotor und dem Generator zwischengeschaltetes Getriebe über die gesamte Axialerstreckung des Getriebes, insbesondere koaxial zum Getriebe, hindurchgeführt ist.

Aus EP 3 795 825 A1 ist es bekannt ein Pitchrohr über ein aus einem elektrischen Nichtleiter hergestelltes Fixiermittel mit einem Platenträger eines Planetengetriebes einer

Windkraftanlage zu fixieren, wobei das Fixiermittel sowohl mit dem Pitchrohr als auch mit dem Platenträger befestigt ist.

Aus EP 3 795 862 A1 ist es bekannt ein Pitchrohr mit Hilfe eines Fixiermittels in einem Getriebe einer Windkraftanlage zu fixieren, wobei zwischen dem Fixiermittel und Pitchrohr eine elektrisch isolierende Isolierschicht vorgesehen ist.

Aus DE 10 2016 202 735 A1 ist es bekannt ein Pitchrohr einer Windkraftanlage teilbar auszuführen, um die Montage des Pitchrohrs zu vereinfachen.

Es besteht ein ständiges Bedürfnis die Durchführung eines Pitchrohrs durch ein Getriebe einer Windkraftanlage möglichst betriebssicher zu gestalten.

Es ist die Aufgabe der Erfindung Maßnahmen aufzuzeigen, die eine betriebssicherere Durchführung eines Pitchrohrs durch ein Getriebe einer Windkraftanlage ermöglichen.

Die Lösung der Aufgabe erfolgt durch ein Pitchrohr mit den Merkmalen des Anspruchs 1, ein Getriebe mit den Merkmalen des Anspruchs 13, sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft ein Pitchrohr für eine Blatteinstellwinkelregelung einer Windkraftanlage, mit einem sich von einem ersten Axialende zu einem zweiten Axialende erstreckenden Rohrkörper zum Durchleiten von Versorgungsleitungen durch ein Getriebe, wobei der Rohrkörper zur elektrischen Isolierung des ersten Axialendes gegenüber dem zweiten Axialende und/oder zur elektrischen Isolierung des Rohrkörpers gegenüber dem Getriebe zumindest in einem axialen Teilbereich aus einem Nichtleitermaterial hergestellt ist.

Durch das als elektrischer Isolator wirkende Nichtleitermaterial des Rohrkörpers ist ein so ausreichend wirksames Dielektrikum vorgesehen, dass selbst an der engsten Stelle zwischen elektrisch leitenden Bauteilen des Rohrkörpers und/oder zwischen dem Rohrkörper und dem Getriebe ein Spannungsüberschlag im regulären Betrieb der Windkraftanlage sicher vermieden werden kann. Von dem Generator in das Pitchrohr induzierte Ströme und/oder Streu- beziehungsweise Leckageströme des Generators können allenfalls bis vor dem aus dem Nichtleitermaterial hergestellten Teilbereich gelangen. Über die Positionierung des Nichtleitermaterial innerhalb des Rohrkörpers kann daher ein durch elektrische Spannungen und/oder elektrische Ströme beeinträchtigter Bereich außerhalb und/oder innerhalb des Rohrkörpers in einen Bereich zurückgehalten werden, wo ein Spannungsüberschlag in eine Getriebekomponente des Getriebes sicher vermieden werden kann. Eine Beschädigung und/oder Beeinträchtigung von Getriebekomponenten durch von dem Pitchrohr begünstigten Spannungsüberschlägen kann dadurch vermieden oder zumindest reduziert werden.

Da es das Pitchrohr selber ist, das eine elektrische Isolierung bewirkt, können elektrische Islolationsmaßnahmen an Getriebekomponenten und/oder an Verbindungselementen, welche eine starre oder relativ bewegliche Verbindung zwischen dem Pitchrohr und dem Getriebe herstellen, vermieden werden. Insbesondere ist es möglich die elektrische Isolierung in dem Pitchrohr als separate vormontierte Baueinheit vorzusehen, wodurch die Montage des Pitchrohrs in dem Getriebe vereinfacht und kostengünstig ist. Beispielswiese kann ein vielteiliges Verbindungselement, dass innerhalb des Getriebes an einer in der Regel nur schwer zugänglichen Stelle eine elektrische Isolierung bereitstellen soll, vermieden werden. Die Montage des Pitchrohrs in einem Antriebsstrang der Windkraftanlage kann dadurch sehr zuverlässig und schnell erfolgen, was insbesondere bei einer für eine Offshore-Anwendung vorgesehene Windkraftanlage vorteilhaft ist, da Montage- und Wartungszeiten sehr stark von geeigneten Wetterverhältnissen abhängen und daher häufig nur kurze Zeitfenster zur Verfügung stehen. Zudem kann die elektrische Isolierung innerhalb des Pitchrohrs im Vergleich zu einem an dem Pitchrohr und dem Getriebe angreifenden Verbindungselement an einer deutlich früheren Stelle im stromführenden Pfad zwischen Generator und Getriebe vorgesehen werden. Dadurch ist es sogar möglich eine elektrische Isolierung zwischen dem Generator und dem Getriebe bereits außerhalb eines Getriebegehäuses des Getriebes vorzusehen, so dass erst gar keine elektrischen Spannungen und/oder Ströme in das Innere des Getriebes innerhalb des Getriebegehäuses eintreten können. Mit Hilfe des Nichtleitermaterials des Rohrkörpers ist das Pitchrohr selber elektrisch isolierend ausgestaltet, so dass kostengünstig und einfach eine elektrisch betriebssicherere Durchführung des Pitchrohrs durch das Getriebe der Windkraftanlage ermöglicht ist.

Das Pitchrohr weist eine axiale Erstreckung aus, die ausreichend ist einen Abstand zwischen dem Generator und dem windkraftangetriebenen Rotor in einer Windkraftanlage zu überbrücken. Vorzugsweise kann das Pitchrohr nicht nur das Getriebe, sondern auch den Generator über die volle axiale Erstreckung durchdringen. Die zugehörige Windkraftanlage ist in der Regel für eine Nennleistung von mindestens 2 MW, vorzugsweise mindestens 5 MW und besonders bevorzugt von mindestens 15 MW dimensioniert und insbesondere für den Offshore-Betrieb ausgelegt, was entsprechende Größenverhältnisse für die Komponenten der Windkraftanlage und dem Pitchrohr sowie dem Rohrkörper des Pitchrohrs impliziert. Hierbei ist in axialer Richtung zwischen dem Generator und dem windkraftangetriebenen Rotor das Getriebe vorgesehen, das vorzugsweise zwei oder mehr in axialer Richtung hintereinander geschaltete Planetenstufen aufweisen kann. Das Pitchrohr kann dieses Getriebe durchdringen und weist daher eine größere axiale Erstreckung als ein Getriebegehäuse des für die Windkraftanlage vorgesehenen Getriebes auf. Gleichzeitigt weist das insbesondere in der Art einer Hohlwelle ausgestaltete Pitchrohr einen ausreichend großen Öffnungsquerschnitt auf, um die für den Betrieb der Blatteinstellwinkelregelung vorgesehenen elektrischen und/oder hydraulischen Versorgungsleitungen, die insbesondere eine Stromzufuhr beziehungsweise eine hydraulische Betätigungskraft bereitstellen können und/oder Sensorsignale weiterleiten können, von dem Generator bis zum Rotor aufnehmen zu können.

Das Pitchrohr weist hierbei eine Wandstärke in radialer Richtung auf, bei der das Eigengewicht des Pitchrohrs und der elektrischen und/oder hydraulischen Versorgungsleitungen ertragen werden kann. Der maximale Außendurchmesser des Pitchrohrs innerhalb des Getriebes ist vorzugsweise möglichst klein gewählt, um innerhalb des Getriebes nicht unnötig Bauraum zu blockieren. Ein für eine Windkraftanlage vorgesehenes Pitchrohr weist in der Regel eine Länge L von 2,0 m ≤ L ≤ 6,0 m, insbesondere 2,5 m ≤ L ≤ 5,0 m, vorzugsweise 3,0 m ≤ L ≤ 4,5 m auf. Ein für eine Windkraftanlage vorgesehenes Pitchrohr weist in der Regel einen Außendurchmesse D von 12 cm ≤ D ≤ 50 cm, insbesondere 14 cm ≤ D ≤ 30 cm, vorzugsweise 15 cm ≤ D ≤ 20 cm auf. Ein für eine Windkraftanlage vorgesehenes Pitchrohr weist in der Regel einen Innendurchmesse d von 10 cm ≤ d ≤ 45 cm, insbesondere 12 cm ≤ d ≤ 26 cm, vorzugsweise 13 cm ≤ d ≤ 16 cm auf. Zudem weist das Pitchrohr an dem ersten Axialende und an dem zweiten Axialende eine geeignete und insbesondere speziell hierzu ausgestaltete Koppelungstechnik auf, um das Pitchrohr mit dem Generator beziehungsweise mit dem Rotor zu koppeln.

Der Rohrkörper des Pitchrohrs kann insbesondere mehrteilig ausgestaltet sein. Beispielsweise kann der Rohrkörper mehrere Rohrstücke aufweisen, die von einander separat ausgeführt sind, jeweils für sich einen radial inneren Innenraum für die zur Blatteinstellwinkelregelung führenden elektrischen und/oder hydraulischen Versorgungsleitungen begrenzen und in axialer Richtung hintereinander miteinander verbunden sein können. Vorzugsweise ist nur in einem Teilbereich der axialen Erstreckung des Rohrkörpers der Nichtleiter vorgesehen, so dass die von diesem Teilbereich verschiedenen anderen Teilbereiche der axialen Erstreckung des Rohrkörpers im Wesentlichen problemlos aus einem elektrisch leitfähigen Material, beispielsweise Stahl, hergestellt sein können. Der Rohrkörper kann gegebenenfalls über seine gesamte axiale Erstreckung oder nur in mindestens einem axialen Teilbereich in radialer Richtung zwei- oder mehrlagig ausgestaltet sein. Beispielsweise kann außerhalb zu einem aus einem leitenden Material hergestelltes Innenrohr des Rohrkörpers ein aus einem Nichtleiter hergestelltes Außenrohr aufgebracht sein. Beispielsweise kann ein aus einem Nichtleiter hergestellter Schlauch auf eine nach radial außen weisenden Mantelfläche des Innenrohrs aufgeschrumpft sein. Das erste Axialende des Rohrkörpers kann im montierten Zustand auf den Generator zu weisen und aus dem Getriebe beziehungsweise aus dem Getriebegehäuse des Getriebes heraus abstehen. Das zweite Axialende des Rohrkörpers kann im montierten Zustand auf den windkraftbetriebenen Rotor zu weisen und aus dem Getriebe beziehungsweise aus dem Getriebegehäuse des Getriebes heraus abstehen.

Der aus dem Nichtleitermaterial hergestellte Axialbereich kann aus einem elektrisch nicht leitfähigen Material, beispielsweise einem polymeren Nichtleiter, beispielsweise ein thermoplastischer Kunststoff, hergestellt sein. Das Nichtleitermaterial weist insbesondere eine elektrische Leitfähigkeit von weniger als 10⁻⁸ S/cm beziehungsweise einen spezifischen Widerstand von über 10⁸ Ω cm auf. Von dem Generator in das Pitchrohr induzierte Ströme und/oder Streu- beziehungsweise Leckageströme des Generators können dadurch nicht in das Getriebe gelangen und dort Schäden anrichten. Das Nichtleitermaterial kann aus einem vergleichsweise harten dielektrischen Isolationsmaterial hergestellt sein. Dies ermöglicht es auftretende Kräfte über das Nichtleitermaterial abstützen zu können. Das Isolationselement kann insbesondere einen hohlzylindrischen Bereich aufweisen. Das Nichtleitermaterial kann innerhalb des Rohrkörpers eine elektrische Leitung in axialer Richtung und/oder in radialer Richtung unterbrechen und dadurch einen Eintritt elektrischer Ladungen in das Getriebe blockieren und/oder abschirmen.

Insbesondere weist der Rohrkörper ein aus dem Nichtleitermaterial hergestelltes Isolierrohr und radial außerhalb des Isolierrohrs eine aus einem von dem Nichtleitermaterial verschiedenen Material, insbesondere Stahl, hergestellte Hülse zur Bereitstellung einer Lagerfläche und/oder einer berührenden oder nicht-berührenden Dichtfläche gegenüber dem Getriebe auf. Falls das Nichtleitermaterial eine ungünstige Materialpaarung mit einer relativ bewegbaren Getriebekomponente aufweisen sollte, kann eine für eine Lagerung und/oder Abdichtung mit der relativ bewegbaren Getriebekomponente besser geeignete Oberfläche von der Hülse bereitgestellt werden. Dadurch kann sichergestellt werden, dass das für die elektrische Isolierung vorgesehene Nichtleitermaterial nicht eine Lagerung und/oder Abdichtung des Pitchrohrs innerhalb des Getriebes beeinträchtigt. Hierzu kann eine Materialdicke des Isolierrohrs zumindest in dem zusammen mit der Hülse eingenommenen Axialbereich geeignet gewählt werden, um einen Spannungsdurchschlag an die Hülse sicher zu verhindern.

Vorzugsweise weist der Rohrkörper ein aus einem von dem Nichtleitermaterial verschiedenen Material, insbesondere Stahl, hergestelltes Innenrohr und radial außerhalb des Innenrohrs eine aus dem Nichtleitermaterial hergestellte Isolierhülse zur Bereitstellung einer Lagerfläche und/oder einer berührenden oder nicht-berührenden Dichtfläche gegenüber dem Getriebe auf. Falls das Nichtleitermaterial eine ausreichend günstige Materialpaarung mit einer relativ bewegbaren Getriebekomponente bereitstellen sollte, können die Funktionen eine elektrische Isolierung bereitzustellen sowie die Funktion eine Lagerung und/oder Abdichtung mit der relativ bewegbaren Getriebekomponente herbeizuführen in der Isolierhülse kombiniert und damit in einem einzigen Bauteil zusammengefasst werden. Hierbei wird die Erkenntnis ausgenutzt, dass im Bereich eines Lagers und/oder einer Dichtung in der Regel die engste Stelle zwischen der Getriebekomponente und dem Innenrohr ausgebildet wird, so dass es für eine ausreichende elektrische Isolierung bereits ausreichend sein kann nur in dem Teilbereich, in dem eine Lagerung und/oder Dichtung des Pitchrohrs in dem Getriebe vorgesehen ist, zusammen mit der hierfür ausgelegten Isolierhülse das elektrisch isolierenden Nichtleitermaterial vorzusehen. Außerhalb dieses Teilbereichs kann zwischen dem Innenrohr und den Getriebekomponenten ein ausreichend großer Luftspalt ausgestaltet sein, der auch ohne das Aufbringen des Nichtleitermaterials eine ausreichende elektrische Isolierung bewirkt. Die Materialdicke des Nichtleitermaterials der Isolierhülse kann geeignet gewählt sein, um einen Spannungsdurchschlag zwischen dem Innenrohr und der Getriebekomponente durch die Isolierhülse hindurch sicher zu verhindern. Zudem kann die axiale Erstreckung des Nichtleitermaterials der Isolierhülse geeignet gewählt sein, um einen Spannungsdurchschlag zwischen dem Innenrohr und der Getriebekomponente an der Isolierhülse axial vorbei sicher zu verhindern.

Es ist möglich in verschiedenen axialen Teilbereichen verschiedene elektrische Isolierungskonzepte vorzusehen. Beispielsweise kann an verschiedenen Lagerstelle zwischen dem Pitchrohr und dem Getriebe und/oder an verschiedenen Dichtstellen zwischen dem Pitchrohr und dem Getriebe, insbesondere je nach vorliegenden Randbedingungen, die Hülse oder die Isolierhülse vorgesehen sein. Insbesondere kann mit Hilfe der Hülse beziehungsweise der Isolierhülse ein ansonsten auftretender Stromfluss in radialer Richtung zwischen dem Rohrkörper und dem Getriebe unterbrochen werden.

Besonders bevorzugt weist der Rohrkörper ein/das aus dem Nichtleitermaterial hergestelltes Isolierrohr und ein/das von dem Nichtleitermaterial verschiedenen Material, insbesondere Stahl, hergestelltes Innenrohr auf, wobei das Isolierrohr und das Innenrohr in axialer Richtung hintereinander miteinander verbunden sind. Das Isolierrohr kann dadurch einen ansonsten auftretender Stromfluss in axialer Richtung innerhalb des Rohrkörper unterbrechen, so dass selbst bei einem in Richtung auf den windkraftbetriebenen Rotor zu vorgesehenen Innenrohr ein Stromfluss in das Getriebe nicht auftreten kann. Selbst bei einem Metall/Metall-Kontakt zwischen dem Pitchrohr und dem Getriebe kann durch das näher zum Generator vorgesehene Isolierrohr ein Stromfluss in das Getriebe sicher vermieden werden.

Insbesondere ist das Isolierrohr in axialer Richtung zwischen zwei Innenrohren vorgesehen. Die Materialmenge des Nichtleitermaterials kann dadurch minimiert werden, wodurch die Herstellungskosten bei einer ausreichenden elektrischen Isolierung reduziert werden können. Insbesondere ist es möglich eine Ankoppelung des Pitchrohrs an dem Generator sowie eine Ankoppelung des Pitchrohrs an dem windkraftangetriebenen Rotor mit Hilfe der, vorzugsweise metallischen, Innenrohre vorzunehmen und das Isolierrohr beabstandet sowohl von dem von dem ersten Axialende des Rohrkörpers als auch von dem zweiten Axialende des Rohrkörpers vorzusehen.

Vorzugsweise sind das Isolierrohr und das Innenrohr über eine Flanschverbindung bewegungsfest miteinander verbunden. Die Flanschverbindung kann insbesondere über axial ausgerichtete Verbindungsmittel, beispielsweise Schrauben, herbeigeführt werden, die über einen zwischen dem Pitchrohr und dem Getriebe ausgebildeten Ringraum leicht für ein Werkzeug zugänglich sind. Die Montage ist dadurch vereinfacht. Zudem kann dadurch leicht eine feste Verbindung zwischen dem Isolierrohr und dem Innenrohr herbeigeführt werden, bei der keine Relativbewegung möglich ist.

Besonders bevorzugt sind das Isolierrohr und das Innenrohr axial gesichert miteinander verbunden. Durch die axiale Sicherung ist eine in axiale Richtung wirkende Verliersicherung ausgebildet, wodurch ein Auseinanderfallen des Rohrkörpers bei in axialer Richtung angreifenden Zugkräften sicher vermieden werden kann. Besonders bevorzugt ist die axiale Sicherung lösbar ausgestaltet, so dass eine Demontage zu Wartungszwecken vereinfacht ist.

Insbesondere sind das Isolierrohr und das Innenrohr in einem axialen Verbindungsbereich ineinander eingesteckt. Hierbei kann ein axialer Teil des Isolierrohrs einen axialen Teil des Innenrohr radial außen umgreifen oder umgekehrt. Zudem kann ein Axialanschlag ausgebildet sein, der die Einstecktiefe definiert begrenzt und zu einer vordefinierten axialen Erstreckung des Rohrkörpers führt. Zudem ist die Montage einfach und schnell.

Vorzugsweise ist mindestens ein Axialsicherungselement zur axialen Sicherung, insbesondere in dem Verbindungsbereich ein radial verlaufendes Verbindungsmittel und/oder außerhalb des Verbindungsbereichs ein Sicherungsring und/oder eine Nutmutter, vorgesehen. Das Axialsicherungselement kann eine axiale Relativbewegung des Isolierrohrs zu dem Innenrohr in einer Axialrichtung oder gleichzeitig in beide Axialrichtungen blockieren und ein axiales Weglaufen verhindern. Ein axiales Auseinanderfallen der ineinander gesteckten Teile kann dadurch kraftschlüssig und/oder formschlüssig vermieden werden. Zusätzlich oder alternativ kann die axiale Sicherung stoffschlüssig, beispielsweise mit Hilfe einer Klebeschicht, erfolgen.

Besonders bevorzugt ist vorgesehen, dass in dem Verbindungsbereich eine/die aus einem von dem Nichtleitermaterial verschiedenen Material, insbesondere Stahl, hergestellte Hülse zur Bereitstellung einer Lagerfläche und/oder einer berührenden oder nicht-berührenden Dichtfläche gegenüber dem Getriebe und/oder eine/die aus dem Nichtleitermaterial hergestellte Isolierhülse zur Bereitstellung einer Lagerfläche und/oder einer berührenden oder nicht-berührenden Dichtfläche gegenüber dem Getriebe vorgesehen ist. Die auf dem Verbindungsbereich aufgesteckte Hülse beziehungsweise Isolierhülse kann die in dem Verbindungsbereich in radialer Richtung übereinanderliegenden Teile des Isolierrohrs und des Innenrohrs zusammenpressen und den Verbund verbessern. Die Hülse und/oder die Isolierhülse können dadurch zusätzlich die Funktion erfüllen, das Isolierrohr und das Innenrohrs miteinander kraftschlüssig zu verbinden.

Insbesondere ist in dem Verbindungsbereich ein Spannring zum bewegungsfesten Verpressen des Isolierrohrs mit dem Innenrohr vorgesehen. Der in dem Verbindungsbereich vorgesehene Spannring, der beispielsweise in der Art einer Schlauchschelle ausgestaltet ist, kann die in dem Verbindungsbereich in radialer Richtung übereinanderliegenden Teile des Isolierrohrs und des Innenrohrs zusammenpressen und den Verbund verbessern. Vorzugsweise kann der Spannring wieder gelöst werden, so dass eine Demontage des Rohrkörpers zu Wartungszwecken vereinfacht ist.

In einer Ausführungsform ist der Rohrkörper einstückig aus dem Nichtleitermaterial hergestellt. Die elektrische Isolationswirkung des Rohrkörpers kann dadurch maximiert werden. Zudem ist die Bauteileanzahl sehr gering, wodurch die Montage der Windkraftanlage vereinfacht sein kann.

Ein weiterer Aspekt der Erfindung betrifft ein Getriebe für eine Windkraftanlage, wobei das Getriebe ein Pitchrohr, das wie vorstehend beschrieben aus- und weitergebildet sein kann, aufweist, wobei insbesondere das erste Axialende des Rohrkörpers an einer generatorseitigen Axialseite eines Getriebegehäuses des Getriebes und/oder das zweite Axialende des Rohrkörpers an einer von der generatorseitigen Axialseite wegweisenden rotorseitigen Axialseite des Getriebegehäuses aus dem Getriebegehäuses herausragt. Das Getriebe kann insbesondere wie vorstehend beschrieben aus- und weitergebildet sein. Mit Hilfe des Nichtleitermaterials des Rohrkörpers ist das Pitchrohr selber elektrisch isolierend ausgestaltet, so dass kostengünstig und einfach eine elektrisch betriebssicherere Durchführung des Pitchrohrs durch das Getriebe der Windkraftanlage ermöglicht ist.

Vorzugsweise ist das Pitchrohr relativ drehbar und relativ axial verschiebbar in dem Getriebe und/oder in dem Getriebegehäuses gelagert und/oder geführt. Eine drehfeste Fixierung mit einer Getriebekomponente des Getriebes kann dadurch eingespart werden. Das Pitchrohr kann beispielswiese an dem ersten Axialende drehfest mit einem Teil des Generators verbunden sein, während das Pitchrohr an dem zweiten Axialende relativ drehbar an dem Rotor gekoppelt ist. Es ist aber auch möglich, dass das Pitchrohr an dem zweiten Axialende drehfest mit einem Teil des Rotors verbunden ist, während das Pitchrohr an dem ersten Axialende relativ drehbar an dem Generator gekoppelt ist. Grundsätzlich ist es auch möglich, dass das Pitchrohr undrehbar, insbesondere unbeweglich, ausgeführt ist. Insbesondere zur Montage kann eine axiale Relativbewegung des Pitchrohrs relativ zum Getriebe und/oder relativ zur Getriebewelle zugelassen werden, wobei das Pitchrohr in der endgültigen Montagepositionen, in welcher das in Umfangsrichtung feststehende Pitchrohr mit dem Rotor der Windkraftanlage und dem Generator gekoppelt ist, axial definiert positioniert ist. Beispielsweise kann das Pitchrohr mit einem Generatorgehäuse des Generators drehfest befestigt sein, so dass eine Lagerung relativ zu dem Rotor des Generators eingespart werden kann. Durch das nicht drehbare Pitchrohr ist eine Kabelführung innerhalb des Pitchrohrs durch das Getriebe hindurch vereinfacht und besonders betriebssicher.

Ein weiterer Aspekt der Erfindung betrifft einen Antriebsstrang für eine Windkraftanlage mit einer mit einem windkraftangetriebenen Rotor verbindbaren Rotorwelle, einer Motorwelle einer im Generatormodus betreibbaren elektrischen Maschine, einem die Rotorwelle mit der Motorwelle drehmomentübertragend verbindenden Getriebe, das insbesondere wie vorstehend beschrieben aus- und weitergebildet sein kann, zur Wandlung eines Drehmoments und einer Drehzahl und einem das Getriebe in axialer Richtung durchdringenden Pitchrohrs, das wie vorstehend beschrieben aus- und weitergebildet sein kann. Der Antriebsstrang kann insbesondere wie vorstehend beschrieben aus- und weitergebildet sein. Mit Hilfe des Nichtleitermaterials des Rohrkörpers ist das Pitchrohr selber elektrisch isolierend ausgestaltet, so dass kostengünstig und einfach eine elektrisch betriebssicherere Durchführung des Pitchrohrs durch das Getriebe der Windkraftanlage ermöglicht ist.

Ein weiterer Aspekt der Erfindung betrifft eine Windkraftanlage zur Erzeugung elektrischer Energie aus Windenergie, mit einem Rotor zur Bereitstellung eines Drehmoments aus Windenergie, einem mit dem Rotor gekoppelten Getriebe, das insbesondere wie vorstehend beschrieben aus- und weitergebildet sein kann, zur Wandlung des Drehmoments und einem Generator zur Erzeugung elektrischer Energie aus dem von dem Getriebe eingeleiteten Drehmoment, wobei der Rotor, das Getriebe und der Generator koaxial zueinander angeordnet sind und ein Pitchrohr, das wie vorstehend beschrieben aus- und weitergebildet sein kann, von dem Generator durch das Getriebe bis zu dem Rotor führt. Die Windkraftanlage kann insbesondere wie vorstehend beschrieben aus- und weitergebildet sein. Mit Hilfe des Nichtleitermaterials des Rohrkörpers ist das Pitchrohr selber elektrisch isolierend ausgestaltet, so dass kostengünstig und einfach eine elektrisch betriebssicherere Durchführung des Pitchrohrs durch das Getriebe der Windkraftanlage ermöglicht ist.

Ein weiterer Aspekt der Erfindung betrifft ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Pitchrohr, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung eine additive Herstellung der Bestandteile des Pitchrohrs durch 3D-Druck und/oder eine Simulation der auf Basis der in den Datenpaketen bezüglich Formgestaltung, Materialeigenschaften und physikalischer Wechselwirkungen hinterlegten Daten beruhenden Funktionsweise des Pitchrohrs durchzuführen. Das Datenagglomerat kann in der Art eines sogenannten "digital twin" eine virtuelle Verkörperung einer im vorliegenden Fall als das Pitchrohr ausgestalteten Vorrichtung darstellen, die eine virtuelle Untersuchung in Form einer Simulation oder eine reale Vergegenständlichung mit Hilfe eines additiven Fertigungsverfahrens ermöglicht. Die Datenpakete können hierbei Daten über die Formgestaltung der verschiedenen Bauteile der Vorrichtung umfassen, wie sie für eine additive Fertigung durch 3D-Druck benötigt werden. Die Datenpakete können vorzugsweise zusätzlich Daten über die Materialeigenschaften der verschiedenen Bauteile der Vorrichtung und/oder der physikalischen Wechselwirkungen zwischen den verschiedenen Bauteilen der Vorrichtung umfassen, um deren Funktionsweise in einer hierzu geeigneten Simulationsumgebung computerbasiert zu simulieren, beispielsweise um mechanische Eigenschaften, wie Verformung, Kraftbelastung, Momentbelastung, insbesondere auf der Basis einer Finite-Elemente-Analyse zu untersuchen und/oder eine Wärmeerzeugung und/oder eine Wärmeverteilungen der verschiedenen Bauteile der Vorrichtung zu untersuchen. Hierbei kann insbesondere jeweils ein Datenpaket einen separat ausgeführten Bestandteil der jeweiligen zugeordneten Vorrichtung abbilden, so dass die einzelnen Bestandteile in ihrer Relativlage und/oder Relativbeweglichkeit und/oder ihrer Kraft- und/oder Wärmeübertragung leicht tatsächlich und/oder virtuell zusammengesetzt werden können, um die erfindungswesentlichen Wechselwirkungen zu realisieren. Dies ermöglicht eine kostengünstige Herstellung von Prototypen und/oder computerbasierten Simulationen, um die Funktionsweise der Vorrichtung zu studieren, Probleme im konkreten Anwendungsfall zu identifizieren und Verbesserungen zu finden. Mit Hilfe des Nichtleitermaterials des Rohrkörpers ist das Pitchrohr selber elektrisch isolierend ausgestaltet, so dass kostengünstig und einfach eine elektrisch betriebssicherere Durchführung des Pitchrohrs durch das Getriebe der Windkraftanlage ermöglicht ist, was mit Hilfe des Datenagglomerats leicht und kostengünstig überprüft werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht einer Windkraftanlage,
Fig. 2: eine schematische Schnittansicht eines Teils der Windkraftanlage aus Fig. 1,
Fig. 3: eine schematische Schnittansicht einer ersten Ausführungsform eines Pitchrohrs für die Windkraftanlage aus Fig. 1,
Fig. 4: eine schematische Schnittansicht einer zweiten Ausführungsform eines Pitchrohrs für die Windkraftanlage aus Fig. 1,
Fig.5: eine schematische Schnittansicht einer dritten Ausführungsform eines Pitchrohrs für die Windkraftanlage aus Fig. 1 und
Fig. 6: eine schematische Schnittansicht einer vierten Ausführungsform eines Pitchrohrs für die Windkraftanlage aus Fig. 1.

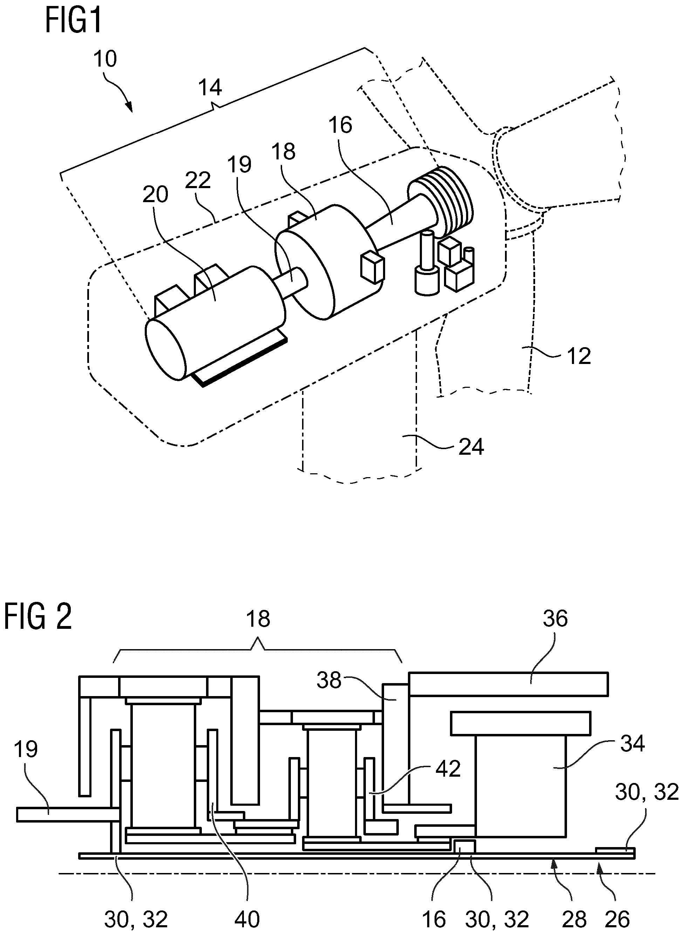

Die in Fig. 1 dargestellte Windkraftanlage 10 kann zur Erzeugung von elektrischer Energie aus Windkraft verwendet werden. Hierzu weist die Windkraftanlage 10 einen Rotor 12 auf, der durch Wind windkraftbetrieben in Drehung versetzt werden kann. Der Rotor 12 ist an einen Antriebsstrang 14 angekoppelt. Hierzu ist der Rotor 12 mit einer Rotorwelle 16 verbunden, die innerhalb des Antriebsstrangs 14 mit einem Getriebe 18 gekoppelt ist, um das über den Rotor 12 und die Rotorwelle 16 eingeleitete Drehmoment zu wandeln. Das in dem Getriebe 18 gewandelte Drehmoment wird über eine Motorwelle 19 einer im Generatormodus betriebenen elektrischen Maschine zugeführt, die einen Generator 20 ausbilden kann. Die von der elektrischen Maschine erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist. Der Rotor 12, das Getriebe 18 und der Generator 20 können koaxial zueinander angeordnet sein und vorzugsweise zur Horizontalen angeschrägt verlaufen.

Wie in Fig. 2 dargestellt ist, kann durch den Generator 20 und das Getriebe 18 hindurch bis zum Rotor 12 ein Pitchrohr 26 verlaufen, um elektrische und/oder hydraulische Versorgungsleitungen zu einer Blatteinstellwinkelregelung (Pitchregelung) des Rotors führen zu können. Das Pichrohr 2 kann hierbei relativ drehbar an der Rotorwelle 16 und an der Motorwelle 19 gelagert und/oder abgedichtet sein. In einer Ausführungsform kann ein, insbesondere einstückiger, Rohrkörper 28 vollständig aus einem Nichtleitermaterial hergestellt sein und über auf dem Rohrkörper 28 aufgepresste metallische Hülsen 30 gelagert und abgedichtet sein. In einer anderen Ausführungsform kann der, insbesondere einstückige, Rohrkörper 28 aus einem elektrisch leitenden Material, beispielsweise Stahl, hergestellt sein, während zur elektrischen Isolierung des Getriebes 18 gegenüber dem Rohrkörper 28 auf dem Rohrkörper 28 aus einem Nichteitermaterial hergestellte Isolierhülsen 32 aufgepresst sein können, die zusätzlich zu der elektrischen Isolierung eine Lagerung und/oder Abdichtung des Pitchrohrs 26 unterstützen können.

Die Rotorwelle 16 kann mit einem Rotor 34 drehfest verbunden sein, der mit einem Stator 36 elektromagnetisch zusammenwirkt, um eine elektrische Maschine des Generator 20 auszubilden. An den Generator 20 kann sich unmittelbar ein Getriebegehäuse 38 des Getriebes 18 anschließen, so dass das Material des Getriebegehäuses 38 auch eine zum Getriebe 18 weisende Axialseite des Generators 20 verschließen kann. Die mit dem Rotor 12 verbindbare Rotorwelle 19 stellt eine Eingangswelle des Getriebes 18, wobei im dargestellten Ausführungsbeispiel das Getriebe eine erste Planetenstufe 40 und eine in axialer Richtung nachfolgende zweite Planetenstufe 42 aufweist.

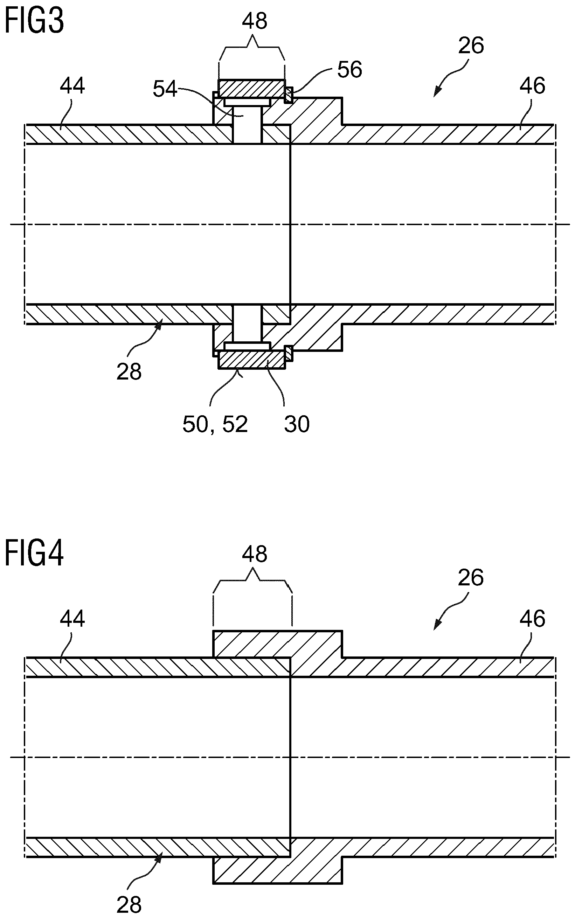

Wie in Fig. 3 dargestellt ist, kann der Rohrkörper 28 des Pitchrohrs 26 auch mehrteilig und als Komposit verschiedener Materialen hergestellt sein. Der Rohrkörper 28 kann ein metallisches Innenrohr 44 und ein aus dem Nichtleitermaterial hergestelltes Isolierrohr 46 aufweisen, die in axialer Richtung hintereinander angeordnet sind und miteinander verbunden sind. Das Isolierrohr 46 stellt einen elektrisch isolierenden axialen Teilbereich des Rohrkörpers 28 bereit, der eine Weiterleitung von in dem Generator 20 induzierten elektrischen Spannungen und Strömen blockiert. Hierbei kann beispielsweise das Innenrohr 44 in das Isolierrohr 46 eingesteckt sein oder umgekehrt. In einem axialen Verbindungsbereich 48, in dem in dem dargestellten Ausführungsbeispiel ein Teil des Innenrohrs 44 und ein Teil des Isolierrohrs 46 in radialer Richtung hintereinander angeordnet sind, kann die metallische Hülse 30 vorgesehen sein, die an ihrer radial äußeren Mantelfläche und Lagerfläche 50 und/oder eine Dichtfläche 52 ausbildet. Die Hülse 30 kann beispielsweise mit Hilfe eines in dem Isolierrohr 46 eingesetzten Sicherungsring 56 axial gesichert sein. Vorzugsweise sind das Innenrohr 44 und das Isolierrohr 46 über ein radial verlaufendes Verbindungsmittel 54, insbesondere Stift, miteinander axial verliersicher verbunden. Insbesondere ist das mindestens eine Verbindungsmittel 54 radial außen von der Hülse 30 abgedeckt. Im dargestellten Ausführungsbeispiel ist das Isolierrohr 46 an der zum Generator 20 weisenden Axialseite vorgesehen, während das Innenrohr 44 an der zum Rotor 12 weisenden Axialseite vorgesehen ist, wobei auch die umgekehrte Anordnung möglich ist. Dies erlaubt sogar einen elektrisch leitfähigen Pfad zwischen dem Innenrohr 44 und der Hülse 30 über das Verbindungsmittel 54, da die axiale Erstreckung des Isolierrohrs 46 groß genug ist, um eine elektrische Isolierung zwischen dem Generator 20 und der Hülse 30 bereitzustellen. Ein unmittelbarer Kontakt der Hülse 30 mit dem das Innenrohr 44 kontaktierenden Verbindungsmittel 54 kann daher zu gelassen werden, wodurch die Herstellung und Montage vereinfacht ist. Insbesondere ist es möglich die Hülse 30 durch einen Spannring zu ersetzen, so dass bei einem Zusammenziehen des Spannrings der Spannring das Verbindungsmittel 54 in radialer Richtung nach innen in das Innenrohr 44 eintreiben kann, um das Isolierrohr 46 mit dem Innenrohr 44 zu verstiften.

Bei der in Fig. 4 dargestellten Ausführungsform des Pitchrohrs 26 ist im Vergleich zu der in Fig. 3 dargestellten Ausführungsform des Pitchrohrs 26 in dem Verbindungsbereich 48 ausschließlich eine Steckverbindung zwischen dem Innenrohr 44 und dem Isolierrohr 46 vorgesehen. Die Verbindung zwischen dem Innenrohr 44 und dem Isolierrohr 46 kann kraftschlüssig, beispielsweise mit Hilfe einer Presspassung zwischen dem Innenrohr 44 und dem Isolierrohr 46 in dem Verbindungsbereich, und/oder stoffschlüssig, beispielsweise mit Hilfe einer Klebeschicht zwischen dem Innenrohr 44 und dem Isolierrohr 46 in dem Verbindungsbereich, und/oder formschlüssig, beispielsweise als Rastverbindung, erfolgen.

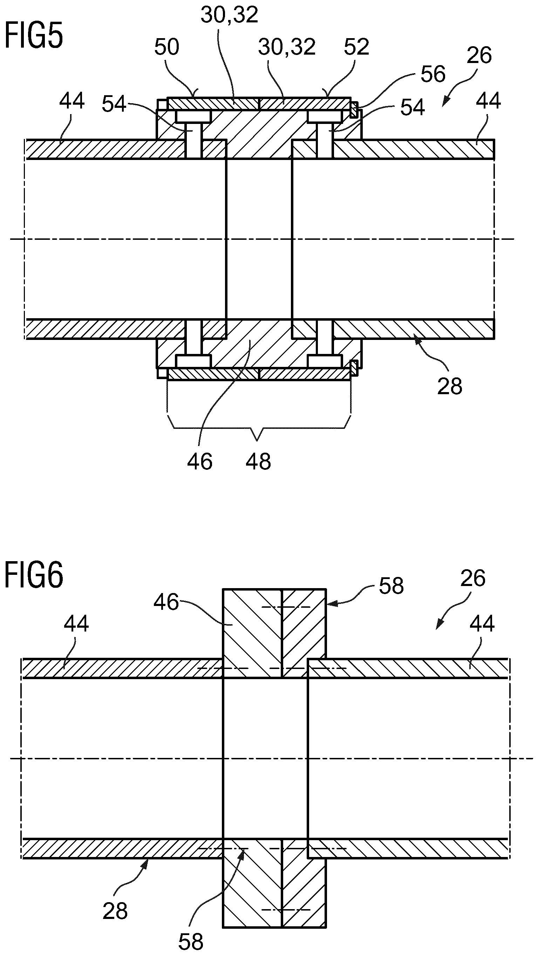

Bei der in Fig. 5 dargestellten Ausführungsform des Pitchrohrs 26 ist im Vergleich zu der in Fig. 3 dargestellten Ausführungsform des Pitchrohrs 26 das Isolierrohr 46 in axialer Richtung zwischen zwei zueinander spiegelbildlich eingesteckten Innenrohren 44 vorgesehen. Hierbei kann eine gemeinsame, insbesondere isolierende, Hülse 30 zur Abdeckung aller Verbindungsmittel 54 vorgesehen sein oder jeweils eine separate Hülse 30, die in axialer Richtung unmittelbar hintereinander angeordnet sein können. Im dargestellten Ausführungsbeispiel kann die eine Hülse 30 die Lagerfläche 50 und die andere Hülse die Dichtfläche 52 ausbilden, so dass sich dadurch leicht und kostengünstig für den jeweiligen Zweck optimierte unterschiedliche Oberflächengüten bereitstellen lassen.

Bei der in Fig. 6 dargestellten Ausführungsform des Pitchrohrs 26 ist im Vergleich zu der in Fig. 5 dargestellten Ausführungsform des Pitchrohrs 26 das Isolierrohr 46 über Flanschverbindungen 58 mit den Innenrohren 44 verbunden. Hierbei sind die verschiedenen Flanschverbindungen 58 auf unterschiedlichen Radien vorgesehen, damit zwischen den Befestigungsmitteln der jeweiligen Flanschverbindung 58 das Material des Isolierrohrs 46 eine ausreichende elektrische Isolierung bereitstellen kann.

## Patentansprüche

1. Pitchrohr (26) für eine Blatteinstellwinkelregelung einer Windkraftanlage (10), mit einem sich von einem ersten Axialende zu einem zweiten Axialende erstreckenden Rohrkörper (28) zum Durchleiten von Versorgungsleitungen durch ein Getriebe (18), wobei der Rohrkörper (28) zur elektrischen Isolierung des ersten Axialendes gegenüber dem zweiten Axialende und/oder zur elektrischen Isolierung des Rohrkörpers (28) gegenüber dem Getriebe (18) zumindest in einem axialen Teilbereich aus einem Nichtleitermaterial hergestellt ist.

2. Pitchrohr (26) nach Anspruch 1, wobei der Rohrkörper (28) ein aus dem Nichtleitermaterial hergestelltes Isolierrohr (46) und radial außerhalb des Isolierrohrs (46) eine aus einem von dem Nichtleitermaterial verschiedenen Material, insbesondere Stahl, hergestellte Hülse (30) zur Bereitstellung einer Lagerfläche (50) und/oder einer berührenden oder nicht-berührenden Dichtfläche (52) gegenüber dem Getriebe (18) aufweist.

3. Pitchrohr (26) nach Anspruch 1 oder 2, wobei der Rohrkörper (28) ein aus einem von dem Nichtleitermaterial verschiedenen Material, insbesondere Stahl, hergestelltes Innenrohr (44) und radial außerhalb des Innenrohrs (44) eine aus dem Nichtleitermaterial hergestellte Isolierhülse (32) zur Bereitstellung einer Lagerfläche (50) und/oder einer berührenden oder nicht-berührenden Dichtfläche (52) gegenüber dem Getriebe (18) aufweist.

4. Pitchrohr (26) nach einem der Ansprüche 1 bis 3, wobei der Rohrkörper (28) ein/das aus dem Nichtleitermaterial hergestelltes Isolierrohr (46) und ein/das von dem Nichtleitermaterial verschiedenen Material, insbesondere Stahl, hergestelltes Innenrohr (44) aufweist, wobei das Isolierrohr (46) und das Innenrohr (44) in axialer Richtung hintereinander miteinander verbunden sind.

5. Pitchrohr (26) nach Anspruch 4, wobei das Isolierrohr (46) in axialer Richtung zwischen zwei Innenrohren (44) vorgesehen ist.

6. Pitchrohr (26) nach Anspruch 4 oder 5, wobei das Isolierrohr (46) und das Innenrohr (44) über eine Flanschverbindung (58) bewegungsfest miteinander verbunden sind.

7. Pitchrohr (26) nach einem der Ansprüche 4 bis 6, wobei das Isolierrohr (46) und das Innenrohr (44) axial gesichert miteinander verbunden sind.

8. Pitchrohr (26) nach einem der Ansprüche 4 bis 7, wobei das Isolierrohr (46) und das Innenrohr (44) in einem axialen Verbindungsbereich (48) ineinander eingesteckt sind.

9. Pitchrohr (26) nach Anspruch 8, wobei mindestens ein Axialsicherungselement zur axialen Sicherung, insbesondere in dem Verbindungsbereich (48) ein radial verlaufendes Verbindungsmittel (54) und/oder außerhalb des Verbindungsbereichs (48) ein Sicherungsring (56) und/oder eine Nutmutter, vorgesehen ist.

10. Pitchrohr (26) nach Anspruch 8 oder 9, wobei in dem Verbindungsbereich (48) eine/die aus einem von dem Nichtleitermaterial verschiedenen Material, insbesondere Stahl, hergestellte Hülse (30) zur Bereitstellung einer Lagerfläche (50) und/oder einer berührenden oder nicht-berührenden Dichtfläche (52) gegenüber dem Getriebe (18) und/oder eine/die aus dem Nichtleitermaterial hergestellte Isolierhülse (32) zur Bereitstellung einer Lagerfläche (50) und/oder einer berührenden oder nicht-berührenden Dichtfläche (52) gegenüber dem Getriebe (18) vorgesehen ist.

11. Pitchrohr (26) nach einem der Ansprüche 8 bis 10, wobei in dem Verbindungsbereich (48) ein Spannring zum bewegungsfesten Verpressen des Isolierrohrs (46) mit dem Innenrohr (44) vorgesehen ist.

12. Pitchrohr (26) nach Anspruch 1, wobei der Rohrkörper (28) einstückig aus dem Nichtleitermaterial hergestellt ist

13. Getriebe (18) für eine Windkraftanlage, wobei das Getriebe (18) ein Pitchrohr (26) nach einem der Ansprüche 1 bis 12 aufweist, wobei insbesondere das erste Axialende des Rohrkörpers (28) an einer generatorseitigen Axialseite eines Getriebegehäuses (38) des Getriebes (18) und/oder das zweite Axialende des Rohrkörpers (28) an einer von der generatorseitigen Axialseite wegweisenden rotorseitigen Axialseite des Getriebegehäuses (38) aus dem Getriebegehäuses (38) herausragt.

14. Getriebe (18) nach Anspruch 13, wobei das Pitchrohr (26) relativ drehbar und relativ axial verschiebbar in dem Getriebe (18) gelagert und/oder geführt ist.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Pitchrohr (26) nach einem der Ansprüche 1 bis 12 vorgesehenen Bestandteile, wobei die Datenpakete dazu hergerichtet sind bei einer Verarbeitung durch eine Datenverarbeitungseinrichtung eine additive Herstellung der Bestandteile des Pitchrohrs (26) durch 3D-Druck und/oder eine Simulation der auf Basis der in den Datenpaketen bezüglich Formgestaltung, Materialeigenschaften und physikalischer Wechselwirkungen hinterlegten Daten beruhenden Funktionsweise des Pitchrohrs (26) durchzuführen.
